# EUROPEAN PATENT APPLICATION

(11) **EP 2 618 325 A1**
(43) Date of publication of application: **24.07.2013**
(21) Application number: 11824965.5
(22) Date of filing: 26.08.2011
(51) Int. Cl.: G09F 9/00, G06F 1/16, G09F 9/40, G09G 3/20, H04M 1/00

(54) **INFORMATION PROCESSING TERMINAL, AND SCREEN CONTROL DEVICE AND METHOD THEREFOR**

(30) Priority: 13.09.2010 JP 2010204486
(71) Applicant: NEC Corporation, Tokyo 108-8001 (JP)
(72) Inventor: HONDA, Kotaro, Tokyo 108-8001 (JP)
(74) Representative: Vossius & Partner
(86) International application number: PCT/JP2011/069287
(87) International publication number: WO 2012/035957

(57) **Abstract**

Provided is an information processing terminal having two screens, which can accurately measure ambient brightness. The information processing terminal includes two rectangular plate-like display devices respectively having screens connected to each other at connection sides. The information processing terminal is used with the two screens arranged horizontally or vertically. Near the side that is opposite to the connection side of one of the display devices, an illuminance sensor is disposed in a position near the top from the center of the opposite side when the two screens are arranged to be used horizontally.

## Description

### Technical Field

The present invention relates to an information processing terminal having two screens for displaying images or character information.

### Background Art

There has been offered an information processing terminal simulating the form of a paper book based on expected use as the book reader of an electronic book and capable of displaying two screens in a double-page spread manner (refer to Patent Literature 1). In the information processing terminal of the two screens, in addition to the use as the book reader, the two screens may be used in various applications. Accordingly, there are various use forms such as use with the two screens arranged horizontally and use with the two screens arranged vertically. In the information processing terminal of this type, use in various places such as indoors or outdoors and various situations can be imagined. Thus, it is desirable to display the screens by adjusting appropriate brightness according to a situation.

Patent Literature 2 discloses a foldable portable terminal device that includes an illuminance sensor and that controls the luminance of a backlight based on the output signal of the illuminance sensor. Thus, the screens can be displayed at a suitable brightness according to a situation.

### Citation List

Patent Literature 1: JP2006-113501A
Patent Literature 2: JP2009-177457A

### Summary of Invention

### Problems to be Solved by Invention

It is the foldable portable terminal of one screen that is disclosed in Patent Literature 2, and the illuminance sensor is disposed near the connection portion of two openable and closable cases. However, in the information terminal having two screens, when the illuminance sensor is disposed near the connection portion of the two cases as disposed in Patent Literature 2, for example, in the case of use with the two cases opened at a certain angle to read the electronic book, there is a possibility that light from the screen of the case of the side where no illuminance sensor is mounted will enter the illuminance sensor. Such entry of light from the own device to the illuminance sensor disables accurate measurement of ambient brightness.

It is therefore an object of the present invention to provide an information processing terminal having two screens, which can accurately measure ambient brightness.

### Solution to Problem

To achieve the object, according to the present invention, an information processing terminal includes two rectangular plate-like display devices respectively having screens connected to each other at connection sides. The information processing terminal is used with the two screens horizontally arranged or vertically arranged. Near the opposite side of the connection side of one of the display devices, an illuminance sensor is disposed in a position near the top from the center of the opposite side when the two screens are horizontally arranged to be used.

### Effects of Invention

The present invention can provide an information processing terminal having two screens, which can accurately measure ambient brightness.

### Brief Description of Drawings

Fig. 1 A sectional view showing an appearance in the opened state of an information processing terminal according to an embodiment.
Fig. 2 A sectional view showing an appearance in the closed state of the information processing terminal according to the embodiment.
Fig. 3 An explanatory view showing a state when information processing terminal 10 is used with two display devices 11 and 12 arranged horizontally.
Fig. 4 An explanatory view showing a state when information processing terminal 10 is used with two display devices 11 and 12 arranged vertically.
Fig. 5 A view showing the overlapped state of all gripping regions assuming both of a case where two display devices 11 and 12 are arranged vertically to grip information processing terminal 10 by both or one hand and a case where two display devices 11 and 12 are arranged horizontally to grip information processing terminal 10 by both hands r one hand.
Fig. 6 An explanatory view showing an arrangement relationship between illuminance sensor 13 and other portions.
Fig. 7 A block diagram showing the mechanical configuration of information processing terminal 10 according to the embodiment.
Fig. 8 A view showing the appearance of information processing terminal 10 according to the modified example of the embodiment.

### Description of Embodiment

The embodiments of the present invention will be described in detail with reference to the drawings.

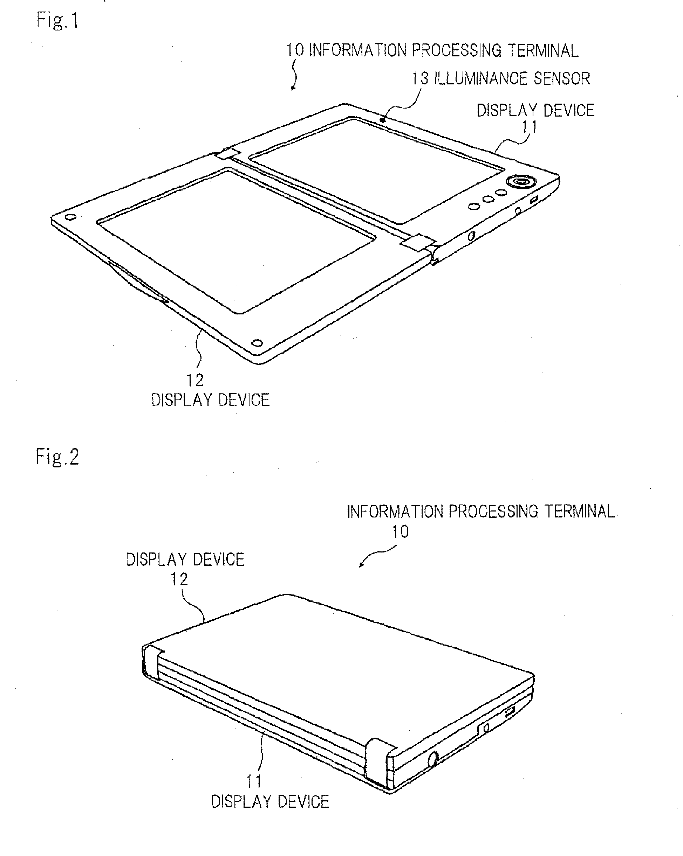

Fig. 1 is a sectional view showing an appearance in the opened state of the information processing terminal according to an embodiment. Fig. 2 is a sectional view showing an appearance in the closed state of the information processing terminal according to the embodiment.

Information processing terminal 10 according to this embodiment is, for example, a portable information terminal having a communication function, and has a configuration where two rectangular plate-like display devices 11 and 12 respectively having screens are connected to each other to be openable and closable at one long side (connection side) by a hinge.

As shown in Fig. 1, in the opened state of display devices 11 and 12, the screens of two display devices 11 and 12 are set in the same direction to simultaneously enter a user's field of vision. As shown in Fig. 2, in the closed state of display devices 11 and 12, the screens of two display devices 11 and 12 face each other, and are protected by the cases of display devices 11 and 12.

Information processing terminal 10 according to this embodiment is used with the screens of two display devices 11 and 12 arranged horizontally or vertically. Near the side that is opposite side to the connection side of one display device 11, illuminance sensor 13 is disposed in a position near the top from the center of the opposite side when the screens of two display devices 11 and 12 are arranged to be used horizontally. Illuminance sensor 13, which is a sensor for detecting the amount of incident light, outputs the level signal of a level according to the amount of light. The level signal output from illuminance sensor 13 is input to a control unit (not shown) to be used for device control carried out by the control unit. For example, the control unit controls the luminance of the screens of display devices 11 and 12 according to the amount of light detected by illuminance sensor 13. Specifically, when the amount of light is large, the surrounding area is bright, and the luminance of the screens is accordingly increased. When the amount of light is small, the surrounding area is dark, and the luminance of the screens is accordingly reduced.

The position of illuminance sensor 13 is set near the opposite side of the connection side of display device 11 so that the entry of light from display device 12 is caused to be difficult. Further, regardless of whether two display devices 11 and 12 arranged horizontally or vertically, it is difficult for the position of illuminance sensor 13 to be hidden by fingers that grip information processing terminal 10. Thus, in information processing terminal 10 including two openable and closable display devices 11 and 12, ambient brightness can be accurately measured.

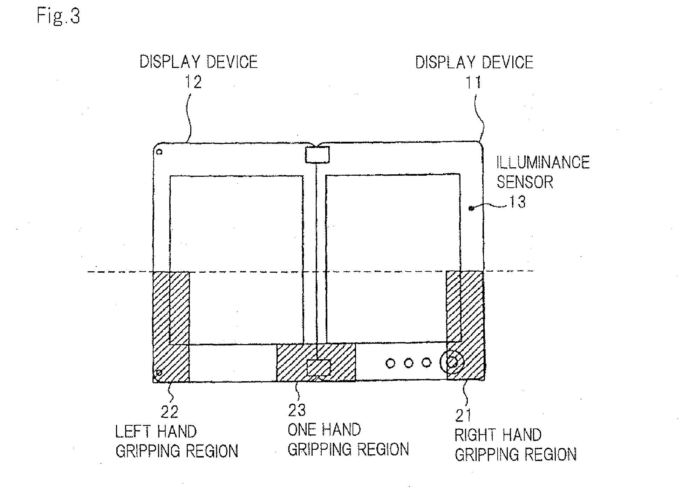

Fig. 3 is an explanatory view showing a state when information processing terminal 10 is used with two display devices 11 and 12 arranged horizontally. When information processing terminal 10 is used with two display devices 11 and 12 arranged horizontally, the user grips information processing terminal 10 by both hands or by one hand.

When gripping information processing terminal 10 by both hands, normally, the user grips right hand gripping region 21 by a right hand, and left hand gripping region 22 by a left hand. When gripping information processing terminal 10 by one hand, normally, the user grips one hand gripping region 23.

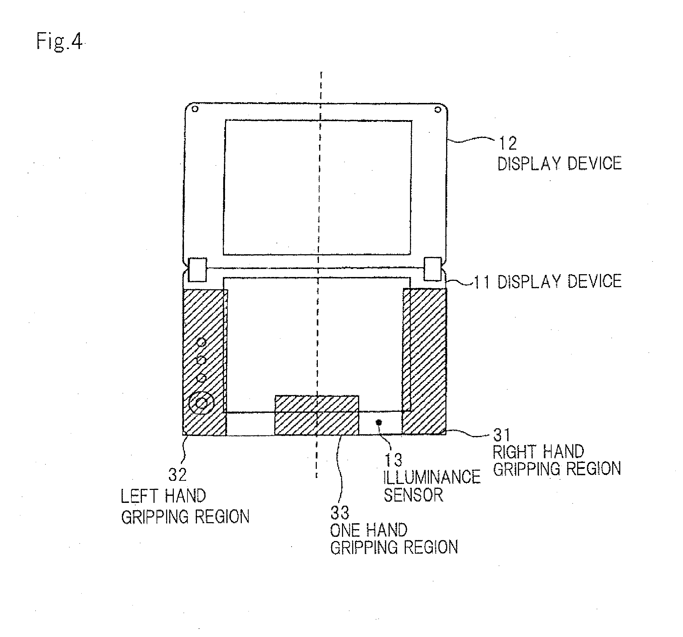

Fig. 4 is an explanatory view showing a state when information processing terminal 10 is used with two display devices 11 and 12 arranged vertically. When information processing terminal 10 is used with two display devices 11 and 12 arranged vertically, the user grips information processing terminal 10 by both hands or by one hand.

When gripping information processing terminal 10 by both hands, normally, the user grips right hand gripping region 31 by the right hand, and grips left hand gripping region 32 by the left hand. When gripping information processing terminal 10 by one hand, normally, the user grips one hand gripping region 33.

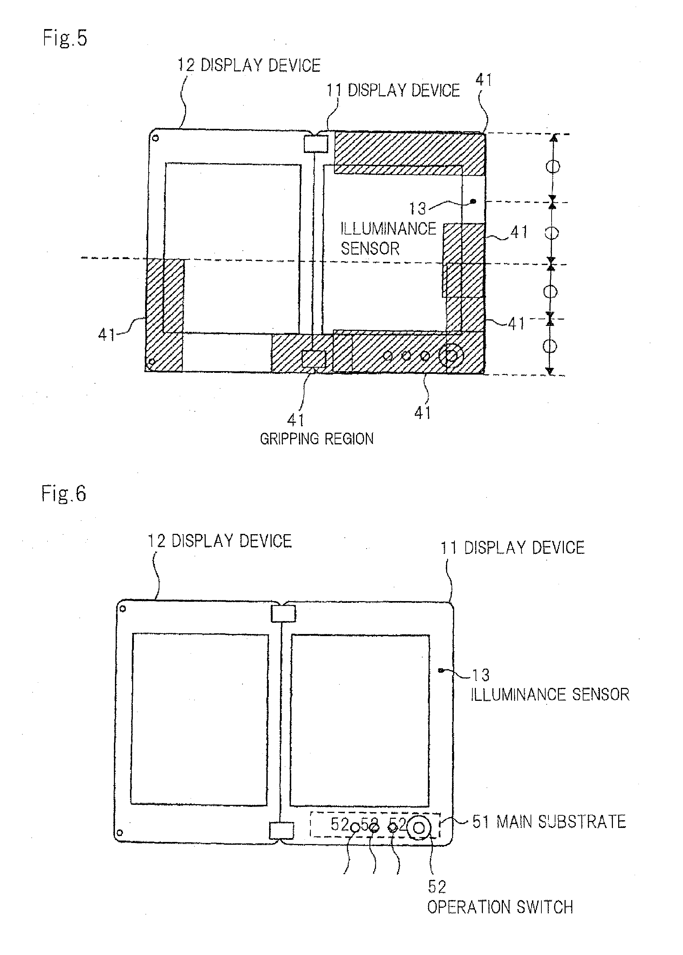

Fig. 5 is a view showing the overlapped state of all gripping regions assuming both of a case where two display devices 11 and 12 are arranged vertically to grip information processing terminal 10 by both hands or by one hand and a case where two display devices 11 and 12 are arranged horizontally to grip information processing terminal 10 by both or one hand. In this case, as an example, two display devices 11 and 12 are arranged horizontally. As shown in Fig. 5, illuminance sensor 13 is disposed in near the side that is opposite to the connection side avoiding gripping region 41.

Fig. 6 is an explanatory view showing an arrangement relationship between illuminance sensor 13 and other portions.

Referring to Fig. 6, operation switch 52 is disposed near a bottom side when display devices 11 and 12 are arranged horizontally. Main substrate 51 is included in display device 11 disposed in the same position as that of operation switch 52. Main substrate 52 is a substrate on which a circuit constituting the control unit using the output signal of illuminance sensor 13 is mounted.

The arrangement of main substrate 51 and illuminance sensor 13 in same display device 11 enables shortening of the wiring length between illuminance sensor 13 and main substrate 51. Wiring between illuminance sensor 13 and main substrate 51 do not need to be laid between display devices 11 and 12.

The arrangement of illuminance sensor 13 above display device 11 having operation switch 52 located in the bottom side enables further reduction of the possibility of that illuminance sensor 13 may be hidden by finger.

In this embodiment, as an example, illuminance sensor 13 is disposed, near the side that is opposite to the connection side of display device 11, in a position near the top by 1/4 of the opposite side from the center of the opposite side when two screens 11 and 12 are arranged to be used horizontally.

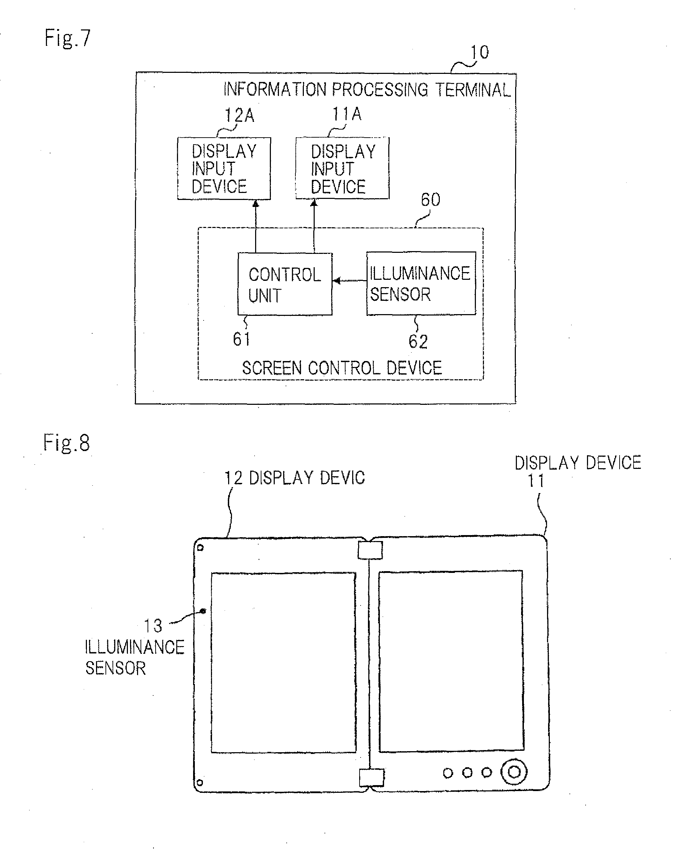

Fig. 7 is a block diagram showing the mechanical configuration of information processing terminal 10 according to the embodiment. The embodiment is shown in a more specific manner. Referring to Fig. 7, information processing terminal 10 includes display input devices 11A and 12A, and screen control device 60. Screen control device 60 includes control unit 61 and illuminance sensor 62.

Display input devices 11A and 12A, which correspond to display devices 11 and 12 shown in Fig. 1 or the like, include touch-panel display devices, and have functions of displaying screens and receiving touching operations on the screens. Display input devices 11A and 12A are similar in appearance to display devices 11 and 12 shown in Fig. 1 or the like.

Illuminance sensor 62 is similar to illuminance sensor 13 shown in Fig. 1 or the like. As in the case of illuminance sensor 13 shown in Fig. 1 or the like, near an opposite side of the connection side of display input device 11A, illuminance sensor 62 is disposed in a position located at some point between the top and the center of the opposite side when the screens of two display input devices 11A and 12A are arranged to be used horizontally.

Control unit 61 executes overall control of the device, such as processing based on the touching operations on display input devices 11A and 12A and luminance control of display input devices 11A and 12A. Control unit 61 is realized by a circuit mounted on main substrate 51 shown in Fig. 6.

Control unit 61 carries out predetermined processing for information of illuminance detected by illuminance sensor 62 while displaying a specific touching operation image on display input device 11A in which illuminance sensor 61 has been disposed, and then controls the luminance of the screens of display input devices 11 A and 12A based on the information of the illuminance. In this case, the specific touching operation image is a touching operation image when there is possibility that a touching operation carried out by finger may hide illuminance sensor 62, for example, a keyboard image of a QWERTY sequence. The predetermined processing for the information of the illuminance is for preventing a change of the luminance of the screens of display input devices 11A and 12A caused when a finger hides illuminance sensor 62 by finger, for example, processing for fixing the information to that indicating illuminance when the displaying of the touching operation image is started.

While a keyboard in the QWERTY sequence is displayed, generally, the user vertically arranges display input devices 11A and 12A to touch display input device 11A by both hands. In this case, there is a possibility that illuminance sensor 62 may be hidden by the user's hand. When a state to enter light to illuminance sensor 62 and a state not to enter light to illuminance sensor 62 occur by turn, the luminance of display input devices 11A and 12A become unstable.

Thus, while the keyboard in the QWERTY sequence is displayed in display input device 11A in which illuminance sensor 62 has been disposed, control unit 61 fixes the information of the illuminance detected by illuminance sensor 62 to a value indicating illuminance when the displaying of the touching operation image is started. This enables stabilization of the luminance of display input devices 11 A and 12A.

This embodiment has been described by way of example where to shorten the wiring length between main substrate 51 and illuminance sensor 13 and eliminate the necessity of laying wiring between display devices 11 and 12, illuminance sensor 13 is disposed in display device 11 which includes main substrate 51 and is located on the lower side when display devices 11 and 12 are arranged vertically. However, the present invention is not limited to the embodiment.

As another example, as shown in Fig. 8, illuminance sensor 13 can be disposed in the same position as that of display device 12 which does not includes main substrate 51 and is located on the upper side when display devices 11 and 12 are arranged vertically. Alternatively, illuminance sensors 13 can be disposed in similar positions of both display device 11 and display device 12. In this case, for example, control unit 61 can control the luminance of the screens of display devices 11 and 12 based on which display device screen, from among display devices 11 and 12, has the higher illuminance value that is detected by two illuminance sensors 13.

The embodiments of the present invention have been described. However, the present invention is not limited to the embodiments. The embodiments can be used in combination or some components can be changed within the scope of the technical ideas of the invention.

This application claims priority from Japanese Patent Application No. 2010-204486 filed September 13, 2010, which is hereby incorporated by reference herein in its entirety.

## Claims

1. An information processing terminal comprising:
two rectangular plate-like display devices respectively having screens connected to each other at connection sides, the information processing terminal being used with the two screens arranged horizontally or vertically; and
an illuminance sensor disposed, near an opposite side of the connection side of one of the display devices, in a position located at some point between a top and a center of the opposite side when the two screens are arranged to be used horizontally.

2. The information processing terminal according to claim 1, wherein a main substrate using an output signal of the illuminance sensor is included in the display device in which the illuminance sensor is disposed.

3. The information processing terminal according to claim 1, wherein an operation switch is disposed near a bottom side of one of the display devices when the two screens are arranged to be used horizontally.

4. The information processing terminal according to claim 1, wherein a main substrate using an output signal of the illuminance sensor is included in one of the display devices, an operation switch is disposed near a bottom side of the display device in which the main substrate is included when the two screens are arranged to be used horizontally, and the illuminance sensor is disposed in the display device in which the main substrate is included.

5. The information processing terminal according to any one of claims 1 to 4, wherein the illuminance sensor disposed in the between a top and a center of opposite side, a distance of said position from the center being 1/4 of length from the top to the bottom when the two screens are arranged to be used horizontally.

6. A screen control device in an information processing terminal including two rectangular plate-like display input devices respectively having touch-panel screens connected to each other at connection sides and used with the two screens arranged horizontally or vertically,
the screen control device comprising:
an illuminance sensor disposed, near an opposite side of the connection side of one of the display input devices, in a position located at some point between a top and a center of the opposite side when the two screens are arranged to be used horizontally; and
a control unit that controls, when a special touch operation image is not displayed in the display input device in which the illuminance sensor is disposed, luminance of the screen of the display input device by using information of illuminance detected by the illuminance sensor, and carries out, when the special touch operation image is displayed in the display input device in which the illuminance sensor is disposed, predetermined processing for the information of the illuminance, and controls the luminance of the screen of the display input device by using the information of the illuminance.

7. The screen control device according to claim 6, wherein when the touch operation image is displayed in the display input device in which the illuminance sensor is disposed, the control unit fixes the information of the illuminance to a value indicating illuminance when the displaying of the touch operation image is started.

8. A screen control method in an information processing terminal including two rectangular plate-like display input devices respectively having touch-panel screens connected to each other at connection sides and used with the two screens arranged horizontally arranged or vertically,
the screen control method comprising:
acquiring information of illuminance detected by an illuminance sensor disposed, near an opposite side of the connection side of one of the display input devices, in a position near a top from a center of the opposite side when the two screens are arranged to be used horizontally; and
carrying out, when a predetermined touch operation image is displayed in the display input device in which the illuminance sensor is disposed, predetermined processing for the information of the illuminance detected by the illuminance sensor, and controlling luminance of the screen of the display input device by using the information of the illuminance.

9. The screen control method according to claim 8, wherein when the touch operation image is displayed in the display input device in which the illuminance sensor is disposed, the information of the illuminance is fixed to a value indicating illuminance when the displaying of the touch operation image is started.
